## Europäisches Patentamt

## European Patent Office

## Office européen des brevets

(19)

(11) Veröffentlichungsnummer: **0 282 688**
**B1**

(12)

# EUROPÄISCHE PATENTSCHRIFT

(45) Veröffentlichungstag der Patentschrift:
08.08.90

(51) Int. Cl.⁵: **B60D 1/00**

(21) Anmeldenummer: **88100098.8**

(22) Anmeldetag: **07.01.88**

(54) Sicherheitsvorrichtung für eine Anhängerkupplung.

(30) Priorität: **17.03.87 DE 3708585**

(43) Veröffentlichungstag der Anmeldung:
**21.09.88 Patentblatt 88/38**

(45) Bekanntmachung des Hinweises auf die Patenterteilung:
**08.08.90 Patentblatt 90/32**

(84) Benannte Vertragsstaaten:
**DE FR GB NL**

(56) Entgegenhaltungen:
**GB-A- 2 120 614**
**US-A- 3 780 546**
**US-A- 3 977 221**
**US-A- 4 291 557**

(73) Patentinhaber: **Firma Albert Berndes, Langekamp 23, D-4990 Lübbecke 1(DE)**

(72) Erfinder: **Berndes, Karl-Josef, Auf dem Gallenkamp 5, D-4990 Lübbecke 1(DE)**

(74) Vertreter: **Stracke, Alexander, Dipl.-Ing. et al, Jöllenbecker Strasse 164, D-4800 Bielefeld 1(DE)**

# Beschreibung

Die vorliegende Erfindung betrifft eine Sicherungsvorrichtung für eine Anhängerkupplung entsprechend dem Gattungsbegriff des Anspruchs 1.

Um zu verhindern, daß abgestellte Anhänger, Wohnwagen, Verkaufwagen od.dgl. entwendet werden, ist es bekannt, das Kupplungsmaul des Kupplungsgehäuses so zu verschließen, daß ein Einbringen der an einem Kraftfahrzeug befestigten Kupplungskugel unmöglich ist, so daß dadurch ein Transport durch das entsprechende Kraftfahrzeug wirksam verhindert wird.

Zum Verschließen des Kupplungsmaules ist aus der DE-A 2 344 976 eine gattungsgemäße Sicherungsvorrichtung bekannt. In der Handhabung erweist sich diese Sicherungsvorrichtung jedoch als sehr umständlich, da die Arretiereinrichtung so lange in einer Arretierposition gehalten werden muß, bis sie durch die Schließeinrichtung, ein Steckschloß, in einer arretierten Endstellung blockiert wird.

In jedem Fall ist also eine beidhändige Betätigung notwendig.

Ferner kann sich die Arretiereinrichtung, also der Zugbolzen zusammen mit dem Riegelteil in Nichtgebrauchsstellung, in der sie nicht blockiert wird, axial frei in der Ausnehmung bewegen. Naturgemäß ist dadurch die Gefahr der Beschädigung einzelner Teile der Arretiereinrichtung, beispielsweise des Zugbolzens, relativ groß.

Ein weiterer Nachteil ist darin zu sehen, daß die Herstellung der Arretiereinrichtung aufwendig und demzufolge teuer ist, da sie aus einer Vielzahl von Einzelteilen besteht, die verhältnismäßig paßgenau zueinander hergestellt werden müssen und die überdies eine aufwendige Montage erforderlich machen.

Der vorliegenden Erfindung liegt daher die Aufgabe zugrunde, eine Sicherungsvorrichtung der gattungsgemäßen Art so zu gestalten, daß ihre Arretiereinrichtung kostengünstiger herstell- und montierbar ist, deren Handhabung einfacher und die Möglichkeit einer unbeabsichtigten Beschädigung weitgehend ausgeschlossen wird. Diese Aufgabe wird erfindungsgemäß durch die im kennzeichnenden Teil des Anspruchs 1 genannten Merkmale gelöst.

Besonders niedrige Herstellungs- und Montagekosten ergeben sich dann, wenn das Riegelteil und der Zugbolzen als einstückiges Gußteil ausgebildet sind, da sich eine mechanische Nachbearbeitung weitgehend erübrigt.

Erfindungsgemäß besteht die Arretiereinrichtung praktisch aus lediglich drei Teilen, nämlich dem Zugbolzen zusammen mit dem Riegelteil, der Druckfeder und dem Anschlagstift, der nach einem Einbringen der Arretiereinrichtung in den Sicherungschuh zweckmäßigerweise durch eine quer durch den Zugbolzen verlaufenden Bohrung geschoben wird.

Die sich einerseits am Boden der Aussnehmung und andererseits an der dem Zugbolzen zugewandten Grundfläche des Riegelteiles abstützende Druckfeder bewirkt, daß das Riegelteil zusammen mit dem Zugbolzen, sowohl in Gebrauchsstellung, also wenn das Riegelteil in das Kupplungsmaul ragt, als auch in einer Nichtgebrauchsstellung, wenn beispielsweise die genannte Sicherungsvorrichtung vom Kupplungsgehäuse entfernt ist, sich immer in einer arretierten Position befindet.

Eine in nicht blockierter Stellung unkontrollierte schlackernde Hin- und Herbewegung der Arretiereinrichtung, wie sie bei der bekannten Sicherungsvorrichtung möglich ist, ist nunmehr ausgeschlossen, so daß die Gefahr einer unbeabsichtigten Beschädigung herausragender Teile ausgeschlossen werden kann.

Dazu trägt auch eine weiter vorteilhafte Ausgestaltung der Erfindung bei, nach der der Zugbolzen in seinem aus dem Sicherungsschuh herausragenden Bereich mit einer Einschnürung versehen ist, die eine Sollbruchstelle bildet. Insgesamt kann der Zugbolzen in seinem Querschnitt größer dimensioniert werden, während die Einschnürung dazu führt, daß der Zugbolzen bei einer beabsichtigten Gewaltanwendung im Einschnürungsbereich bricht.

Durch die erfindungsgemäßen Maßnahmen wird das Riegelteil praktisch selbsttätig in eine Arretierungsposition gebracht, so daß lediglich zu Beginn eines Aufschiebens auf das Kupplungsgehäuse das Riegelteil durch den Zugbolzen aus der Arretierungsposition bewegt werden muß. Das anschließende Blockieren mittels der Schließeinrichtung, vorzugsweise eines Steckschlosses, erfolgt ohne daß die Arretiereinrichtung nochmals betätigt werden muß. Dadurch ist eine erhebliche Handhabungserleichterung gegeben.

Zur Handhabungserleichterung gehört auch, daß der Sicherungsschuh nach einem weiteren erfindungsgemäßen Gedanken den weitgehend umlaufenden Kragen des Kupplungsgehäuses lediglich in den sich gegenüberliegenden Seitenbereichen übergreift. Dadurch ist es möglich, daß bei Nichtgebrauch der Sicherungsvorrichtung diese über das Kupplungsmaul hinaus in Richtung einer Anhängerdeichsel geschoben wird, an der das Kupplungsgehäuse festgelegt ist, und wo dann der Sicherungsschuh einerseits an der Stirnseite der Anhängerdeichsel und die Arretiereinrichtung andererseits an der Schale des Kupplungsmechanismus eine Endlagebegrenzung findet.

Es ist somit nicht mehr erforderlich, die Sicherungsvorrichtung bei Nichtgebrauch separat mit sich zuführen, daß aus naheliegenden Gründen besondere Vorteile mit sich bringt.

Darüber hinaus ist ein Lösen der Kupplung von der Kugel des Kraftfahrzeuges während der Fahrt ausgeschlossen, da ein Entriegeln der Schale des Kupplungsmechanismus durch dessen Blockieren ausgeschlossen ist.

Weitere vorteilhafte Ausgestaltungen der Erfindung sind in den Unteransprüchen gekennzeichnet. Ausführungsbeispiele der Erfindung werden nachfolgend anhand beigefügter Zeichnungen beschrieben.

Es zeigen:

Fig. 1 eine Anhängerkupplung mit einer erfindungsgemäß ausgebildeten Sicherungsvorrichtung in einer Seitenansicht,

Fig. 2+ 3 verschiedene Stellungen einer Sicherungsvorrichtung beim Einsatz an einer teilweise im Längsschnitt dargestellten Anhängerkupplung,

Fig. 4 eine Draufsicht auf die Sicherungsvorrichtung und einen Teilbereich der Anhängerkupplung gesehen in Richtung des Pfeiles IV in Fig. 1,

Fig. 5 eine Vorderansicht der Sicherungsvorrichtung und Anhängerkupplung gesehen in Richtung des Pfeiles V in Fig. 1,

Fig. 6 ein weiteres Ausführungsbeispiel einer einer an einer Anhängerkupplung festgelegten Sicherungsvorrichtung im Längsschnitt dargestellt,

Fig. 7 ein weiteres Ausführungsbeispiel einer Sicherungsvorrichtung beim Einsatz an einer Anhängerkupplung in einer Längsschnittdarstellung,

Fig. 8 die Sicherungsvorrichtung gesehen in Richtung des Pfeiles VIII in Fig. 7.

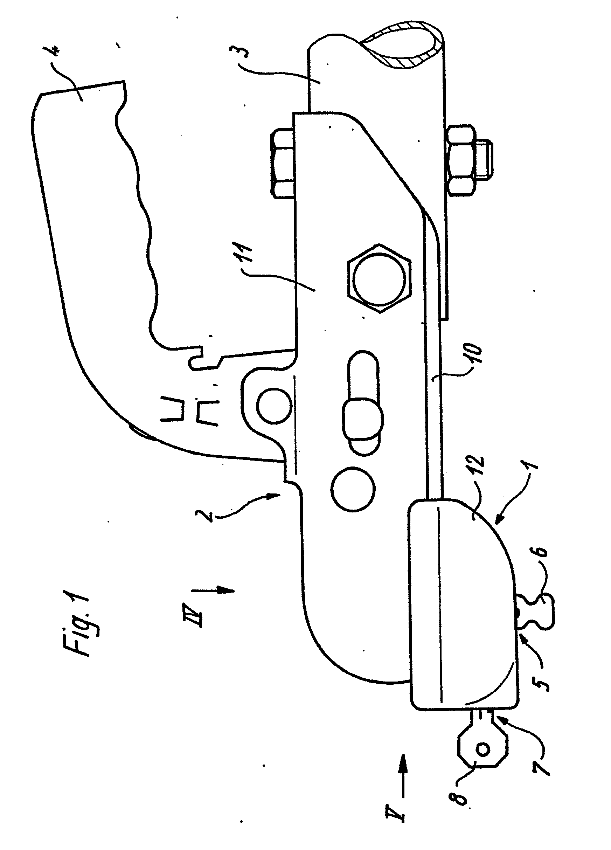

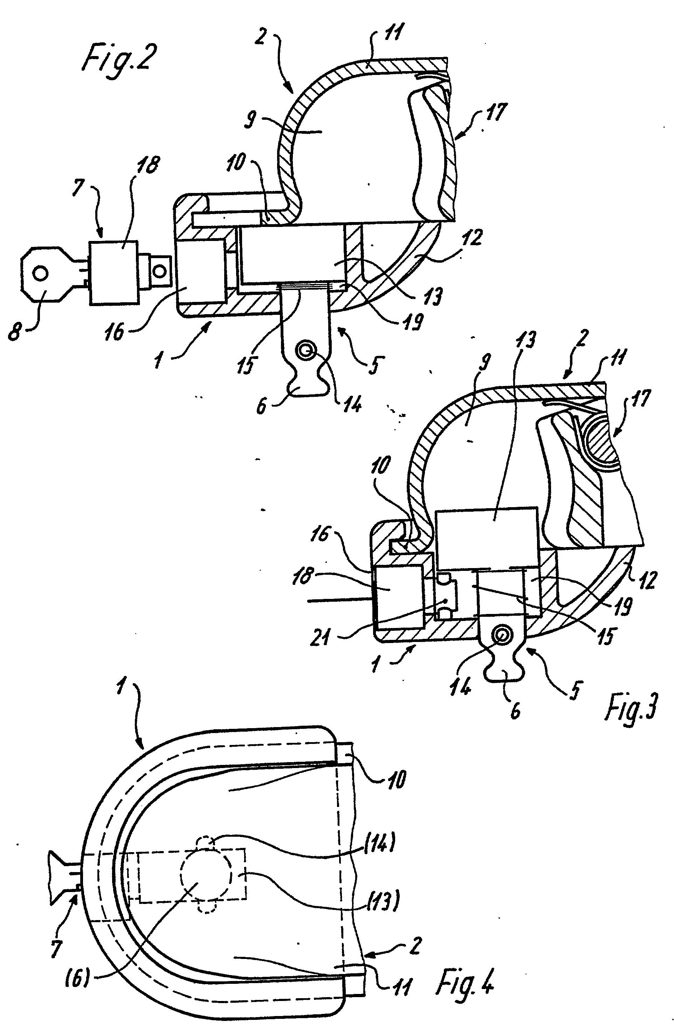

Eine in der Figur 1 dargestellte Anhängerkupplung 2, die mit einem Handhebel 4 betätigbar ist, ist an einer Anhängerdeichsel 3 befestigt. An der Unterseite der Anhängerkupplung 2 ist eine Sicherungsvorrichtung 1 vorgesehen, die ein Kupplungsmaul 9, das besonders gut in den Figuren 2 und 3 zu erkennen ist, eines Kupplungsgehäuses 11 überdeckt.

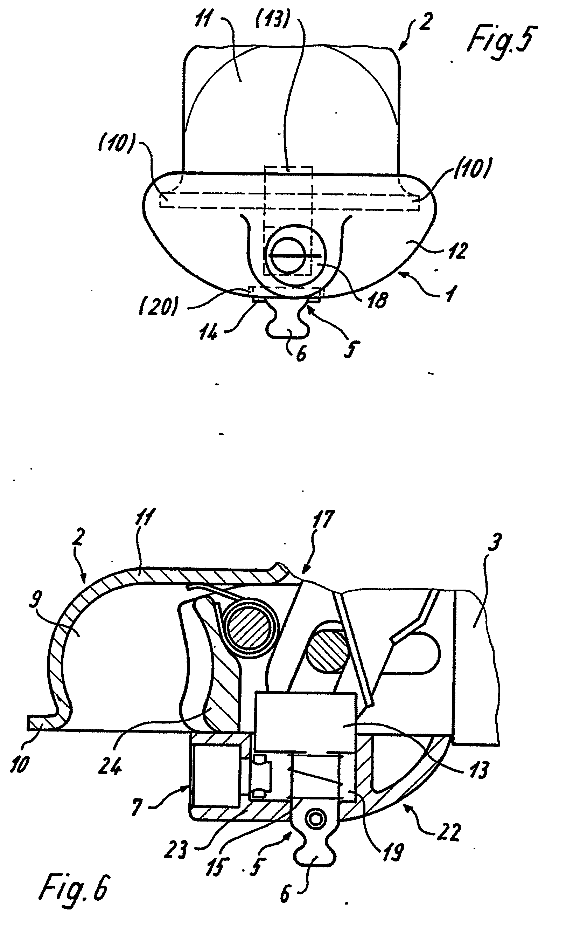

Dabei umgreift ein Sicherungsschuh 11 einen seitlich umlaufenden Kragen 10 des Kupplungsgehäuses 11 formschlussig, wie die Figur 4 sehr anschaulich verdeutlicht. Die Sicherungsvorrichtung 1 wird dadurch sowohl an dem Kupplungsgehäuse 11 gehalten als auch entsprechend geführt.

Die Figur 2 zeigt eine Position der Sicherungsvorrichtung 1, die diese zu Beginn eines Aufschiebens auf das Kupplungsgehäuse 11 einnimmt. Eine Arretiereinrichtung 5, die quer zur Längsachse des Kupplungsgehäuses 11 in der Sicherungsvorrichtung 1 angeordnet ist, nimmt dabei eine Stellung ein, in der ein Zugbolzen 6 der Arretiereinrichtung 5 weitgehend aus dem Sicherungsschuh 12 herausgezogen ist und sich mit einem festverbundenen Riegelteil 13 an der Unterseite des Kragens 10 abstützt. Durch eine Druckfeder 15, die auf dem Zugbolzen 6 geführt ist und einerseits an der dem Zugbolzen 6 zugewandten Grundfläche des Reigelteiles 15 und andererseits am Boden einer Ausnehmung 19 anliegt, in der das Riegelteil 13 in dieser Stellung einliegt, wird eine in Richtung des Kupplungsmaules 9 wirkende Kraft auf die Arretiereinrichtung 5 ausgeübt.

Beim Weiterschieben der Sicherungsvorrichtung 1 bis in eine in der Figur 3 dargestellte Position, wird das Riegelteil 13 durch die Druckfeder 15 soweit in das Kupplungsmaul 19 gedrückt, daß die Wandung des Kupplungsgehäuses 11 zwischen dem innenliegenden Riegelteil 13 und dem stirnseitig außen anliegenden Sicherungsschuh 12 festliegt, so daß eine in alle Richtungen wirksame Arretierung gewährleistet ist. Zur Endlagebegrenzung der Arretiereinrichtung 5 in Richtung des Kupplungsmaules 9 ist quer durch den Zugbolzen 6, der, wie in der Figur ersichtlich, im vorliegenden Ausführungsbeispiel beidseitig aus dem Zugbolzen 6 herausragt und in Verschlußstellung der Sicherungsvorrichtung 1 in einer in den Sicherungsschuh 12 eingelassenen Nut 20 einliegt. Denkbar ist aber auch, daß der, beispielsweise als Spannhülse ausgebildete Anschlagstift 14 sich direkt an der Außenfläche des Sicherungsschuhs 12 abstützt, daß also keine Nut vorgesehen ist.

Mit Hilfe einer Schließeinrichtung 7, die im vorliegenden Ausführungsbeispiel aus einem Steckschloß gebildet ist, das aus einem Schließzylinder 18 und einem Schlüssel 8 besteht, wird die Arretiereinrichtung 5 blockiert. In einer der Figur 3 entsprechenden Stellung der Arretiereinrichtung 5, in der das Riegelteil 13 in das Kupplungsmaul hineinragt, ruht der Schließzylinder 18 in einer in der freien Stirnseite des Sicherungsschuhs 12 angeordneten Ausnehmung 16, während ein Ansatz 21 des Schließzylinders 18 den Sicherungsschuh 12 soweit durch tritt, daß er in der Ausnehmung 19 zwischen der Unterseite des Riegelteiles 13 und dem Boden der Ausnehmung 19 liegt. Dadurch wird eine Hin- und Herbewegung der Arretiereinrichtung 5 verhindert und eine wirksame Sicherung des Kupplungsmaules 9 erreicht.

Eine in der Figur 6 dargestellte Sicherungsvorrichtung 22 ist so ausgebildet, daß ihr Sicherungsschuh 23 dem Kragen 10 des Kupplungsgehäuses 11 in den sich gegenüberliegenden Seitenbereichen übergreift. Demzufolge bildet der stirnseitige Kragen 10 keinen Anschlag, so daß die Sicherungs vorrichtung 22 über die Öffnung des Kupplungsmaules 9 hinaus soweit in Richtung der Anhängerdeichsel 3 geschoben werden kann, bis sie an diese anschlägt. Während dieses Verschiebens muü selbstverständlich die Arretiereinrichtung 5 entriegelt sein, das heißt, das Riegelteil 13 liegt in dieser Zeit in der Ausnehmung 19. Nach Erreichen einer Endstellung wird das Riegelteil 13 nach einem Loslassen des Zugbolzens 6 durch die Federkraft der Druckfeder 15 in den durch eine Schale 24 des Kupplungsmechanismus 17 und durch die Anhängerdeichsel 3 gebildeten Raum gedrückt, wobei die Schale 24 und die Stirnfläche der Anhängerdeichsel 3 die jeweiligen Endanschläge bilden, so daß die Sicherungsvorrichtung 22 auch in dieser Stellung arretiert ist. Zweckmäßigerweise wird dabei die Arretiereinrichtung 5 durch die Schließeinrichtung 7 blockiert.

Zum Verschließen des Kupplungsmaules 9 wird entsprechend zu den Ausführungen der Figur 3 verfahren, wobei allerdings dann, wenn das Riegelteil 13 in das Kupplungsmaul 9 ragt, die Endanschläge durch die Stirnseitenwandung des Kupplungsgehäuses 11 und durch die Schale 24 des Kupplungsmechanismus 17 gebildet werden. Selbst dann, wenn durch den Handhebel 4 der Kupplungsmechanismus 17 betätigt wird und die Schale 24 aus ihrer vorherigen Stellung geschwenkt wird, kann die Sicherungsvorrichtung ohne Lösen der Arretiereinrichtung 5 nicht soweit in Richtung der Anhängerdeichsel verschoben werden, daß das Kupplungsmaul 9 freigegeben wird, da der gesamte Kupplungsmechanismus 17 soweit in das Innere des Kupplungsgehäuses 11 ragt, das er gegenüber dem Riegelteil 13 eine Barriere bildet.

Der Zugbolzen 6 weist an seinem freien, aus dem Sicherungsschuh 12 ragenden Endbereich eine als Sollbruchstelle dienende Einschnürung 26 auf.

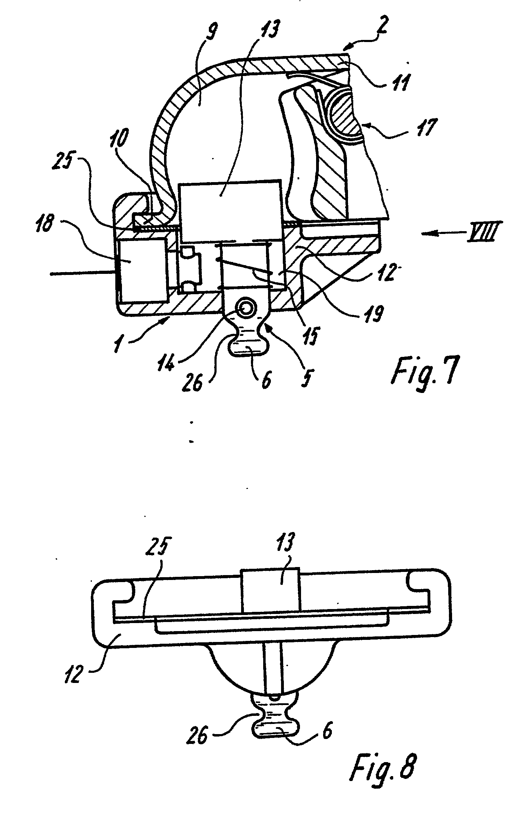

Eine weitere Ausgestaltung der erfindungsgemäßen Sicherungsvorrichtung ist in den Figuren 7 und
8 dargestellt. Da die Kupplungsgehäuse 11 aus unterschiedlich dicken Materialien hergestellt werden, sind die Kragen 10 ebenfalls unterschiedlich
dick. Um nun nicht für jede Materialdicke einen angepaßten Sicherungsschuh herstellen zu müssen,
der den entsprechenden Kragen des Kupplungsgehäuses 11 nahezu spielfrei umgreift, ist erfindungsgemäß vorgesehen, zum Spielausgleich eine Distanzplatte 25 in den Sicherungsschuh 12 einzubringen,
die einen Dickenausgleich schafft.
Dabei ist die Distanzplatte 25 so gestaltet, daß sie
im Innenbereich des Sicherungsschuhs 12 aufliegt
und mit einer Öffnung versehen ist, durch die das
Riegelteil 13 geführt ist. Dadurch wird die Distanzplatte 25 in ihrer Lage fixiert und kann nicht verrutschen.
Je nach Dicke des Kragens können zum Ausgleich
unterschiedlich dicke Distanzplatten 25 eingesetzt
werden,wobei sie durch Herausziehen des Zugbolzens 6 bzw. des Riegelteiles 13 und leichtes Anheben der Distanzplatte 25 auf einfachste Weise entnehmbar bzw. neu einsetzbar ist.

## Patentansprüche

1. Sicherungsvorrichtung für eine Anhängerkupplung eines Kraftfahrzeuganhängers, bestehend aus einem Sicherungsschuh (12), der über einen weitgehend umlaufenden Kragen (10) eines
Kupplungsgehäuses (11) schiebbar ist und dann die
Öffnung eines Kupplungsmaules (9) abdeckt, das
der Aufnahme einer an einem Kraftfahrzeug befestigten Kupplungskugel dient, und der eine mit einer
Schließeinrichtung (7) blockierbare Arretiereinrichtung (5) aufweist, die aus einem durch eine Druckfeder (15) belasteten Riegelteil (13) und einem aus dem
Sicherungsschuh (12) herausragenden Zugbolzen
(6) besteht, wobei das in einer Ausnehmung (19) des
Sicherungsschuhs (12) geführte Riegelteil (13) in Gebrauchsstellung in das Kupplungsmaul (9) hineinragt, **dadurch gekennzeichnet, daß** das Riegelteil
(13) und der Zugbolzen (6) fest miteinander verbunden sind und daß die über den Zugbolzen (6) geführte Druckfeder (15) sich einerseits am Boden der
Ausnehmung (19) und andererseits an der dem Zugbolzen (6) zugewandten Grundfläche des Riegelteiles (13) abstützt, wobei der Zugbolzen (6) einen
querverlaufenden Anschlagstift (14) aufweist, der
den Zugbolzen (6) mindestens einseitig überragt
und sich bei entlasteter Stellung der Druckfeder
(15) an der Außenseite des Sicherungsschuhs (12)
abstützt.

2. Sicherungsvorrichtung nach Anspruch 1, dadurch gekennzeichnet, daß der Sicherungsschuh
(23) den Kragen (10) in den sich gegenüberliegenden
Seitenbereichen übergreift.

3. Sicherungsvorrichtung nach Anspruch 1, dadurch gekennzeichnet, daß die Schließeinrichtung
(7) von der freien Stirnseite aus in den Sicherungsschuh (12,23) einführbar ist.

4. Sicherungsvorrichtung nach Anspruch 1, dadurch gekennzeichnet, daß der Zugbolzen (6) auf seinem aus dem Sicherungsschuh ragenden freien
Endbereich eine Einschnürung (26) aufweist.

5. Sicherungsvorrichtung nach Anspruch 1, dadurch gekennzeichnet, daß der Anschlagstift (14) in
Gebrauchsstellung der Arretiereinrichtung (5) in einer Nut an der Außenseite des Sicherungsschuhs
(12,23) einliegt.

6. Sicherungsvorrichtung nach Anspruch 1, dadurch gekennzeichnet, daß im Innern des Sicherungsschuhs (12, 23) eine Distanzplatte (25) lösbar
festgelegt ist, auf der sich der Kragen (10) abstützt.

7. Sicherungsvorrichtung nach Anspruch 1, dadurch gekennzeichnet, daß der Zugbolzen (6) und
das Riegelteil (13) als einstückiges Gußteil ausgebildet sind.

## Claims

1. A security device for a towing coupling of a motor vehicle trailer, comprising a security shoe (12)
which can be pushed over a substantially peripherally extending collar (10) of a coupling housing (11)
and then covers over the opening of a coupling
mouth (9) which serves to receive a coupling ball secured to a motor vehicle, the security shoe (12) having an arresting means (5) which can be blocked with
a locking device (7) and which comprises a bolt portion (13) loaded by a compression spring (15) and a
draw pin (6) which projects out of the security shoe
(12), wherein in the position of use the bolt portion
(13) which is guided in an opening (19) in the security
shoe (12) projects into the coupling mouth (9), characterised in that the bolt portion (13) and the draw
pin (6) are fixedly connected together and that the
compression spring (15) which is guided over the
draw pin (6) is supported at one end against the bottom of the opening (19) in the security shoe and at
the other end against the base surface of the bolt
portion (13), which is towards the draw pin (6),
wherein the draw pin (6) has a transversely extending abutment pin (14) which projects beyond the
draw pin (6) at least at one side and bears against
the outside of the security shoe (12) when the compression spring (15) is in the unloaded position.

2. A security device according to claim 1 characterised in that the security shoe (23) engages over
the collar (10) in the mutually oppositely disposed
side regions.

3. A security device according to claim 1 characterised in that the locking device (7) can be introduced into the security shoe (12, 23) from the free
end.

4. A security device according to claim 1 characterised in that the draw pin (6) has a constriction
(26) on its free end region which projects out of the
security shoe.

5. A security device according to claims 1 characterised in that in the position of use of the arresting
means (5) the abutment pin (14) is disposed in a
groove at the outside of the security shoe (12, 23).

6. A security device according to claim 1 characterised in that a spacer plate (25) against which the
collar (10) bears is releasably fixed in the interior of
the security shoe (12, 23).

7        EP 0 282 688 B1

7. A Security device according to claim 1 characterised in that the draw pin (6) and the bolt portion (13) are in the from of a onepiece casting.

**Revendications**

1. Dispositif de blocage pour un attelage d'une remorque d'un véhicule automobile, constitué d'un patin de blocage (12) qui peut être enfilé sur un rebord sensiblement circulaire (10) d'un boîtier d'attelage (11), et qui recouvre alors l'ouverture d'une mâchoire d'attelage (9) qui sert à loger une sphère d'attelage fixée sur le véhicule automobile, le dispositif comportant un dispositif d'arrêt (5) pouvant être bloqué par un dispositif de verrouillage (7), qui est constitué d'un élément à verrou (13) soumis à l'action d'un ressort de pression (15) et d'un tirant (6) dépassant du patin de blocage (12), l'élément à verrou (13), qui est guidé dans un évidement (19) du patin de blocage (12), pénétrant en position d'utilisation dans la mâchoire d'attelage (9), caractérisé en ce que l'élément à verrou (13) et le tirant (6) sont solidaires l'un de l'autre, et enc e que le ressort de pression (15), passant sur le tirant (6), prend appui d'une part sur le fond de l'évidement (19) et d'autre part sur la surface de base de l'élément à verrou (13) tournée vers le tirant (6), le tirant (6) présentant un goujon d'arrêt transversal (14) qui dépasse, au moins d'un côté, ce tirant (6) et qui prend appui contre la face extérieure du patin de blocage (12), en position non sollicitée du ressort de pression (15).

2. Dispositif de blocage selon la revendication 1, caractérisé en ce que le patin de blocage (23) recouvre le rebord (10) dans les régions latérales en vis-à-vis.

3. Dispositif de blocage selon la revendication 1, caractérisé en ce que le dispositif de verrouillage (7) peut être introduit dans le patin de blocage (12, 23) à partir de la face frontale libre.

4. Dispositif de blocage selon la revendication 1, caractérisé en ce que le tirant (6) présente un étranglement (26) sur sa zone terminale libre, ressortant du patin de blocage.

5. Dispositif de blocage selon la revendication 1, caractérisé en ce que le goujon d'arrêt (14) repose, en position d'utilisation du dispositif d'arrêt (5), dans une rainure sur la face extérieur du patin de blocage (12, 23).

6. Dispositif de blocage selon la revendication 1, caractérisé en ce qu'une plaque d'écartement (25), sur laquelle s'appuie le rebord (10), est placée librement à l'intérieur du patin de blocage (12, 23).

7. Dispositif de blocage selon la revendication 1, caractérisé en ce que le tirant (6) et l'élément à verrou (13) sont réalisés d'une seule pièce, en fonte moulée.

Fig. 1

*Fig.2*

*Fig.3*

*Fig.4*

EP 0 282 688 B1

Fig. 5

Fig. 6

Fig. 7

Fig. 8